# FASCICULE DE BREVET EUROPEEN

(11) **EP 3 615 424 B1**
(45) Date de publication et mention de la délivrance du brevet: **26.05.2021**
(21) Numéro de dépôt: 18722128.8
(22) Date de dépôt: 09.04.2018
(51) Int. Cl.: B64C 29/00, B64C 39/06, B64C 3/10, B64C 25/06, B64C 25/04

(54) **AÉRONEF À VOILURE RHOMBOÉDRIQUE À DÉCOLLAGE ET/OU ATTERRISSAGE VERTICAL**
FLUGZEUG MIT RHOMBOEDRISCHER FLÜGELSTRUKTUR FÜR SENKRECHTES STARTEN UND/ODER LANDEN
RHOMBOHEDRAL-WING AIRCRAFT FOR VERTICAL TAKE-OFF AND/OR LANDING

(30) Priorité: 24.04.2017 FR 1753513
(43) Date de publication de la demande: 04.03.2020
(73) Titulaire: Fly-R, 97460 Saint-Paul (FR)
(72) Inventeur: VARIGAS, François, 97460 Saint-Paul (FR)
(74) Mandataire: Cornuejols, Georges
(86) Numéro de dépôt international: PCT/FR2018/050881
(87) Numéro de publication internationale: WO 2018/197772

(56) Documents cités:
- WO-A1-2015/019255
- WO-A1-2016/016889
- WO-A2-2015/143093
- DE-U1- 20 111 224
- FR-A- 383 375
- FR-A1- 2 521 521
- FR-A1- 2 830 839
- US-A- 2 577 385
- US-A- 5 046 684

## Description

### DOMAINE TECHNIQUE

La présente invention concerne un aéronef à voilure rhomboédrique à décollage et/ou atterrissage vertical. Elle s'applique, en particulier, aux avions et drones dont l'orientation de l'axe des hélices permet un vol horizontal, d'une part, et un atterrissage, voire un décollage, vertical, d'autre part.

### ÉTAT DE LA TECHNIQUE

Depuis l'avènement de l'aéronautique, les concepteurs se sont toujours préoccupés de dessiner un avion ayant un domaine de vol le plus vaste possible tout en minimisant la masse de la structure. On rappelle ici que le domaine de vol d'un aéronef est l'espace en vitesse air, facteur de charge et altitude à l'intérieur duquel il peut fonctionner en sécurité.

Avec les nouvelles technologies, les nouveaux matériaux et les moyens de calculs toujours plus puissants, de nouveaux concepts d'avions font leur apparition.

Les ailes rhomboédriques, ou closes, ou en diamant, ou à fente, ou annulaires, etc..., ont été considérée dès les débuts de l'aviation. Ce n'est qu'assez récemment que des études aérodynamiques poussées, grâce aux nouveaux outils de calculs et de simulations numériques, ont démontré leur gain potentiel en matière de traînée induite, même si ce gain reste relativement modeste (de l'ordre de quelques pourcents). En revanche, la masse de la structure est fortement réduite (environ 30% de gain) de par le contreventement naturel des ailes entre elles mais au prix d'une rigidité accrue.

Les aéronefs à voilure rhomboédrique présentent néanmoins l'inconvénient de nécessiter une piste d'atterrissage pour pouvoir atterrir, voire pour pouvoir décoller.

### EXPOSÉ DE L'INVENTION

La présente invention vise à remédier à tout ou partie de ces inconvénients.

A cet effet, selon un premier aspect, la présente invention vise un aéronef selon la revendication 1. Plusieurs caractéristiques optionelles sont mentionnées dans les revendications dépendantes 2-15.

Ainsi, pour le vol, les arbres des hélices sont positionnés parallèles à l'axe du fuselage tandis que, pour l'atterrissage, le vol stationnaire, voire le décollage, les arbres des hélices sont verticaux.

Cet aéronef à atterrissage vertical possède une capacité d'emport ainsi qu'un rayon d'action (an anglais « range ») très proche du même aéronef sans moyen de basculement des moteurs. C'est un point assez paradoxal puisque, dans leur ensemble, les avions à atterrissage vertical sont plus lourds qu'un avion traditionnel pour des performances similaires.

Dans des modes de réalisation, l'axe perpendiculaire à l'axe principal du fuselage et à l'axe passant par les extrémités d'ailes avant qui passe par le centre de gravité de l'aéronef traverse le triangle exinscrit passant par les hélices.

Grâce à la présence, aux sommets d'un triangle, d'au moins trois moteurs munis d'hélices, le vol stationnaire est stable.

Dans des modes de réalisation, l'hélice en extrémité arrière du fuselage est positionnée en dessous de l'axe principal du fuselage lorsque l'arbre de cette hélice est dans l'orientation perpendiculaire à l'axe principal du fuselage.

Grâce à ces dispositions, les ailes arrière peuvent s'étendre jusqu'au moteur arrière sans limiter le débattement de l'hélice arrière.

Dans des modes de réalisation, une concavité du fuselage en extrémité arrière du fuselage constitue un logement formant carénage de protection de l'hélice arrière, les pales de l'hélice arrière traversant cette concavité lorsque l'arbre de rotation de l'hélice est dans l'orientation perpendiculaire à l'axe principal du fuselage.

Grâce à ces dispositions, l'hélice arrière est protégée dans la configuration de vol vertical et l'hélice arrière bénéficie d'une configuration pousseur, plus efficace.

Dans des modes de réalisation, le centre des hélices avant sont, lorsque l'arbre de rotation des hélices est selon l'orientation parallèle à l'axe principal du fuselage, positionnés plus bas, par rapport au fuselage de l'aéronef, que le centre de l'hélice arrière, et, lorsque l'arbre de rotation des hélices est selon l'orientation perpendiculaire à l'axe principal du fuselage, les centres des hélices avant sont positionnés plus haut que le centre de l'hélice arrière.

Le positionnement des hélices avant, en configuration de vol horizontal, plus bas que l'hélice arrière, favorise l'inclinaison de l'aéronef assurant la portance. En configuration de vol vertical, le positionnement des hélices avant plus haut que l'hélice arrière fait bénéficier l'hélice arrière d'une configuration pousseur plus efficace aérodynamiquement parlant, donc permettant plus de modulation de puissance pour assurer l'équilibre pendant la phase d'atterrissage, qui peut être délicate à cause des effets de vent et de sol.

Selon l'invention, lorsque l'arbre de rotation des hélices est selon l'orientation perpendiculaire à l'axe principal du fuselage, les centres des hélices avant sont positionnés au-dessus de l'axe principal du fuselage et, lorsque l'arbre de rotation des hélices est selon l'orientation parallèle à l'axe principal du fuselage, les centres des hélices avant sont positionnés en dessous de l'axe principal du fuselage.

La stabilité du vol vertical est ainsi renforcée puisque le centre de poussée est au-dessus du centre de gravité.

Dans des modes de réalisation, le support d'emplanture avant forme un patin d'atterrissage.

On protège ainsi la structure et les ailes de l'aéronef lors de l'atterrissage.

Dans des modes de réalisation, les moteurs des ailes sont montés sur la fibre neutre de torsion des ailes avant. Les efforts appliqués sur les ailes sont ainsi réduits.

Dans des modes de réalisation, les moteurs sont aux sommets d'un triangle isocèle dont la mesure du plus petit angle est supérieure à 45 degrés.

Dans des modes de réalisation, la mesure du plus petit angle du triangle formé par les moteurs est supérieure à 50 degrés.

Ce triangle proche du triangle équilatéral augmente la stabilité de l'aéronef en vol vertical.

Dans des modes de réalisation, les hélices des moteurs portés par les ailes sont positionnées au-dessus des ailes lorsque les arbres de ces hélices sont dans l' orientation perpendiculaire à l'axe principal du fuselage.

Dans des modes de réalisation, les hélices des moteurs portés par les ailes sont positionnées en amont des ailes avant, dans le sens du vol de l'aéronef.

Sur le plan aérodynamique, le fait d'avoir les ailes avant soufflées accentue l'effet rhomboïde et augmente sérieusement l'efficacité des gouvernes ainsi que la variation de cambrure des ailes soufflées. Ceci se traduit par une augmentation des performances de l'avion aux basses vitesses et une diminution de la trainée. Cette diminution est sensible pour des envergures d'aéronef au-delà de cinq mètres.

Du fait du souffle des hélices, les écoulements autour des ailes, surtout des ailes avant, sont beaucoup plus sains et mieux contrôlés. Ils permettent donc une plus grande efficacité des volets, surtout en position basse pour augmenter la portance.

Le fait d'avoir deux moteurs sur les ailes avant permet d'obtenir un contrôle en lacet inexistant sur une aile rhomboïde pure. Ce qui peut revêtir une grande importance pour certaines phases de vol, dans des scénarios de missions spécifiques.

Dans des modes de réalisation, les supports d'emplanture d'ailes sont positionnés respectivement, en dessous et au-dessus du fuselage.

Cette configuration est, en effet, optimale.

Dans des modes de réalisation, à chaque jonction des extrémités d'ailes avant et arrière est positionnée une surface verticale de fermeture des extrémités d'ailes.

Ces surfaces verticales de fermeture des extrémités d'ailes permettent de réduire la trainée de la voilure.

Dans des modes de réalisation, des prolongations verticales vers le bas des surfaces verticales de fermeture des extrémités d'ailes forment des patins d'atterrissage.

Ces patins d'atterrissage protègent la structure et les ailes de l'aéronef lors de l'atterrissage.

Dans des modes de réalisation, le fuselage ne porte aucun empennage vertical.

### BRÈVE DESCRIPTION DES FIGURES

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement et en vue en perspective, un mode de réalisation particulier de l'aéronef objet de l'invention dans une configuration de vol horizontal,
- la figure 2 représente une vue de détail de la figure 1,
- la figure 3 représente, schématiquement et en vue en perspective, l'aéronef illustré en figures 1 et 2, dans une configuration de vol vertical,
- la figure 4 représente une vue de détail de la figure 3,
- la figure 5 représente, schématiquement et en vue en perspective, l'aéronef illustré en figures 1 à 4, dans une configuration de vol horizontal,
- la figure 6 représente, schématiquement et en vue en perspective, l'aéronef illustré en figures 1 à 4, dans une configuration de vol vertical,
- la figure 7 représente, schématiquement et en vue de dessus, un mode de réalisation particulier de l'aéronef objet de l'invention, dans une configuration de vol horizontal,
- la figure 8 représente, schématiquement et en vue de côté, l'aéronef illustré en figure 7,
- la figure 9 représente, schématiquement et en vue de dessus, l'aéronef illustré en figures 7, dans une configuration de vol vertical et
- la figure 10 représente, schématiquement et en vue de côté, l'aéronef illustré en figure 9.

### DESCRIPTION DE MODES DE RÉALISATION DE L'INVENTION

On note, dès à présent, que les figures ne sont pas à l'échelle. Pour simplifier la compréhension des dessins et schémas, les ailes et surfaces verticales à la jonction des extrémités d'ailes sont représentées par des surfaces de faible épaisseur.

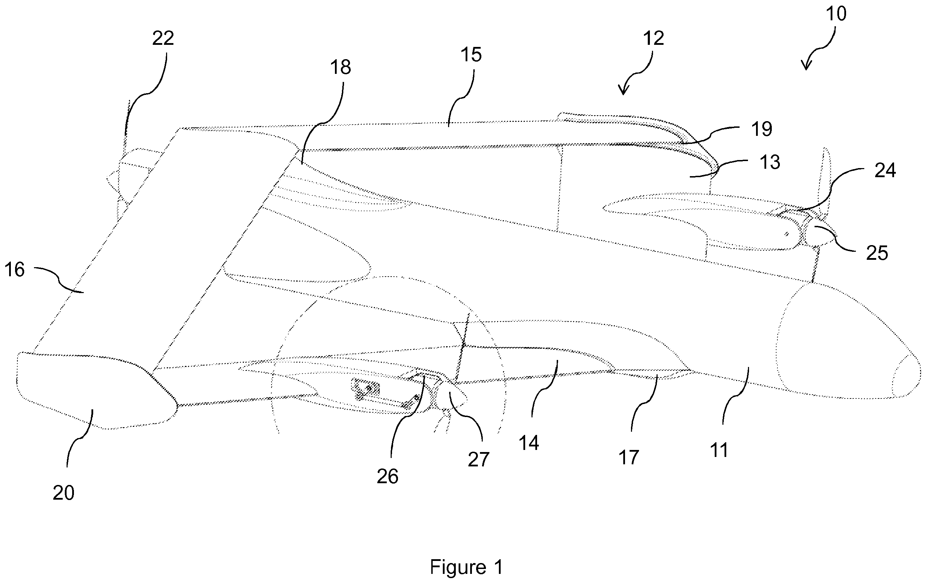

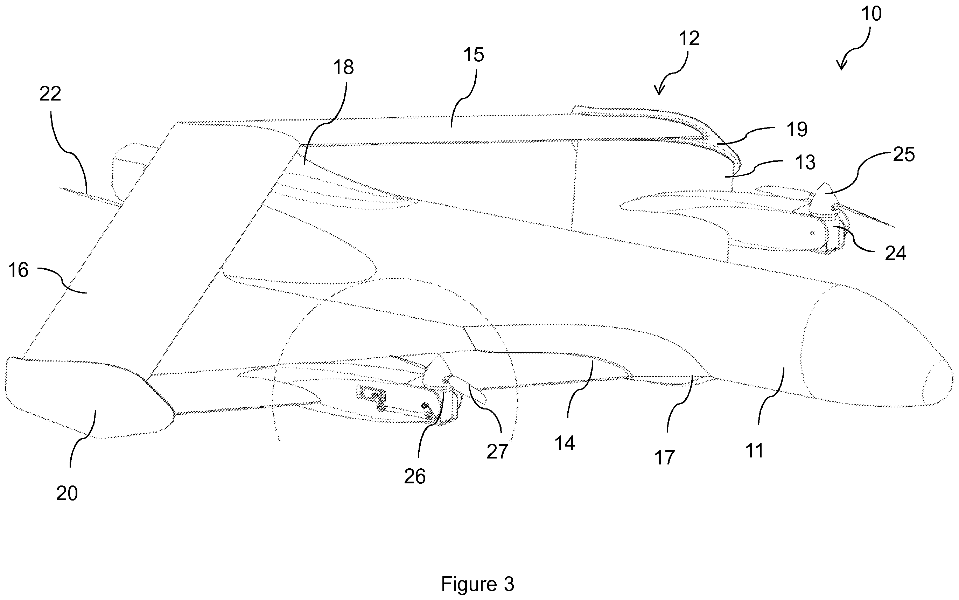

On observe, en figures 1 à 6, un aéronef 10 comportant un fuselage 11 et une voilure 12 de forme rhomboédrique.

On rappelle qu'une voilure rhomboédrique (ou rhomboïdale) est une variante d'ailes en tandem dont les extrémités se rejoignent. L'aile avant fixée sur la partie basse du fuselage est en flèche arrière, et l'aile arrière fixée sur la partie haute de la dérive est en flèche avant ; l'aile totale, dite jointe, forme une surface projetée continue en losange creux.

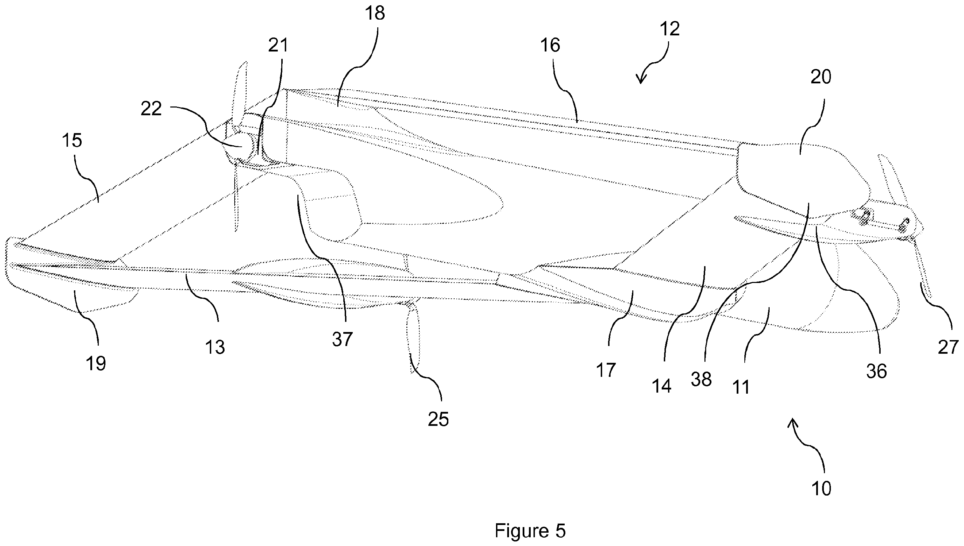

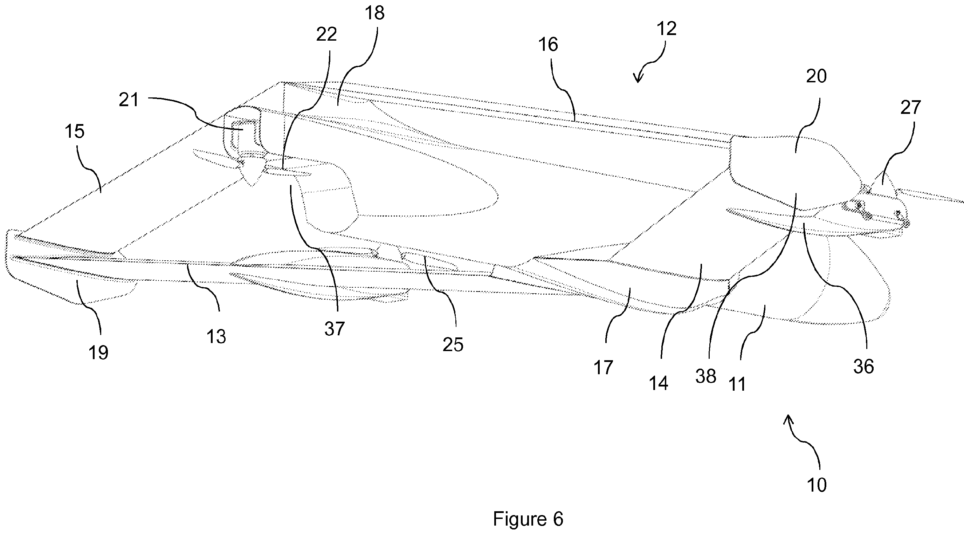

La voilure 12 comporte une aile avant gauche 13, une aile avant droite 14, une aile arrière gauche 15 et une aile arrière droite 16. Les ailes avant 13 et 14 se rejoignent sur un support d'emplanture 17 d'ailes avant situé en dessous du fuselage 11. Les ailes arrière 15 et 16 se rejoignent sur un support d'emplanture 18 d'ailes arrière. Comme illustré dans les figures, les supports 17 et 18 d'emplanture d'ailes sont préférentiellement positionnés respectivement, en dessous et au-dessus du fuselage 11, cette configuration étant optimale pour plusieurs aspects. On observe aussi dans les figures que le fuselage 11 ne porte aucun empennage vertical. Comme illustré en figures 5 et 6, le support d'emplanture 17 forme un patin d'atterrissage, conjointement avec les prolongations verticales vers le bas 38 de surfaces aérodynamiques verticales 19 et 20, de fermeture des extrémités d'ailes. On observe aussi, en figures 5 et 6, des pylônes moteurs 36 pour intégrer le moteur et le mécanisme de rotation/basculement.

Les ailes gauches 13 et 15 se rejoignent sur une jonction d'ailes gauche située au-dessus du fuselage 11. Les ailes droites 14 et 16 se rejoignent sur une jonction d'ailes droite. A chaque jonction des extrémités d'ailes avant et arrière est positionnée une surface verticale, à gauche 19 et à droite 20, de fermeture des extrémités d'ailes.

La fermeture des extrémités des ailes, pour obtenir une aile d'allongement quasiment infini, consiste ainsi en une surface aérodynamique verticale 19 ou 20 (profilée ou non). Une des caractéristiques des ailes rhomboïdes est l'absence de surface verticale, donc d'un gain non négligeable en trainée de profil. Chaque surface verticale 19 ou 20 qui joint deux ailes en leurs extrémités permet de fermer l'espace et ainsi, en théorie, d'avoir une aile proche d'une aile à envergure infinie.

Chacune des ailes 13, 14, 15 et 16 représentées dans les figures présentent une forme générale en rectangle. Elles sont ainsi à corde constante, leurs bords d'attaque et de fuite étant parallèles. Bien entendu, la présente invention ne se limite pas à ce type de forme générale mais s'étend à toutes les formes d'ailes, hormis les ailes delta.

Les ailes avant 13 et 14 présentent des surfaces de contrôle (non représentées), ailerons ou volets. Les ailes arrière 15 et 16 présentent des surfaces de contrôle (non représentées), ailerons ou volets.

A l'arrière du fuselage 11, un moteur 21 entraîne en rotation une hélice 22 pour propulser l'aéronef 10. Un moteur 24 entraînant en rotation une hélice 25 est porté par l'aile avant gauche 13. Un moteur 26 entraînant en rotation une hélice 27 est porté par l'aile avant droite 14.

L'aéronef 10 est ainsi propulsé par un moteur 21 à hélice 22 située à l'arrière du fuselage 11 et par des moteurs 24 et 26 à hélices 25 et 27, respectivement, portés par les ailes avant 13 et 14, respectivement.

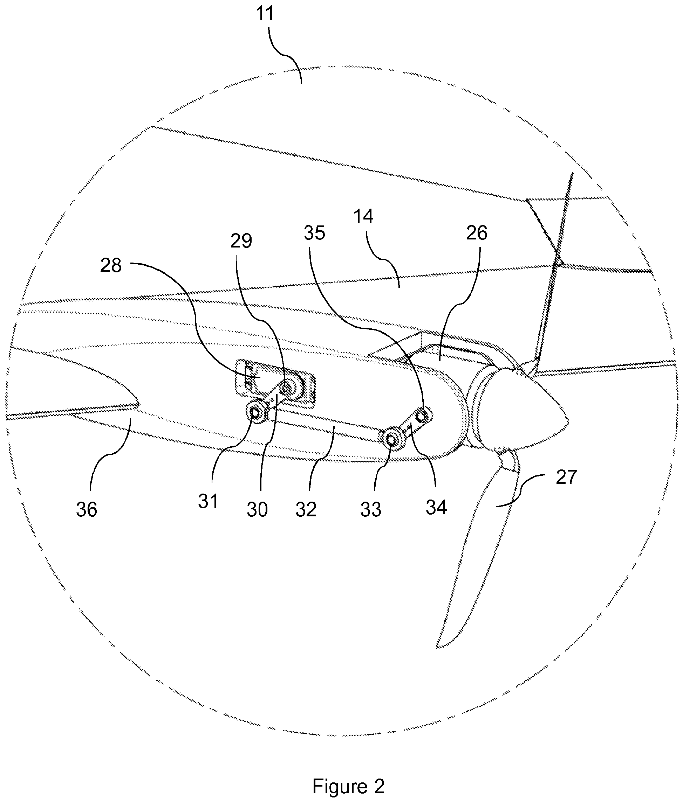

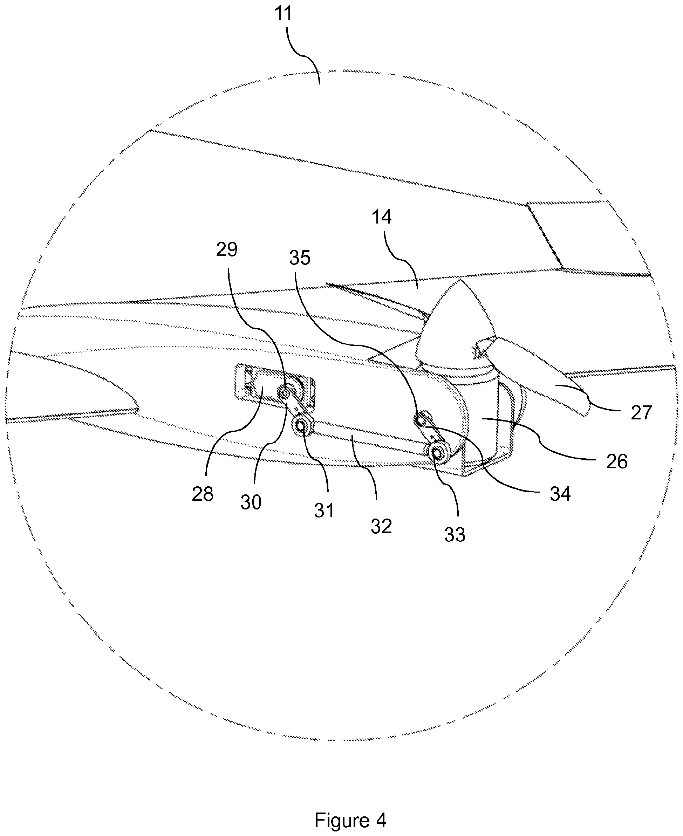

On observe, en figures 2 et 4, un servo-moteur 28 mettant en rotation un arbre 29 solidaire d'une extrémité d'une tige droite 30. L'autre extrémité de la tige 30 est montée sur un pivot 31 qui entraîne une bielle 32 reportant le mouvement du pivot 31 sur un pivot 33. Une extrémité d'une tige droite d'actionnement 34 est montée sur le pivot 33. L'autre extrémité de la tige 34 est solidaire d'un arbre de rotation 35 du moteur 26. Ainsi, l'actionnement du servo-moteur fait commuter le plan de rotation de l'hélice 27 d'une configuration verticale (figure 2) pour le vol horizontal à une configuration horizontale (figure 4), pour le vol stationnaire ou vertical, par exemple pour une phase d'atterrissage ou de décollage. Bien entendu, les deux autres moteurs, 21 et 24, sont munis de servo-moteurs et de systèmes mécaniques similaires qui réalisent le basculement des moteurs. L'arbre de rotation de chacune des hélices 22, 25 et 27 bascule entre une orientation dite « horizontale » parallèle à l'axe principal du fuselage 11 (figures 1, 2 et 5) et une orientation dite « verticale » perpendiculaire à l'axe principal du fuselage 11 et à un axe passant par les extrémités des ailes avant.

Ainsi, pour le vol rapide, les arbres des hélices 22, 25 et 27 sont dans la position « horizontale » tandis que, pour l'atterrissage, le vol stationnaire, voire le décollage, les arbres des hélices 22, 25 et 27 sont dans la position verticale. Cet aéronef 10 à atterrissage vertical possède une capacité d'emport ainsi qu'un rayon d'action (an anglais « range ») très proche du même aéronef sans moyen de basculement des moteurs.

Préférentiellement, les actionnements des trois servo-moteurs 28 sont synchronisés. En revanche, les vitesses de rotation des moteurs 21, 24 et 26 et des hélices 22, 25 et 27 sont commandées indépendamment.

Dans le cas d'un drone, un boîtier électronique de contrôle (non représenté) comporte une unité centrale qui actionne les servo-moteurs et commande les moteurs et de façon coordonnée. Le boîtier électronique de contrôle assure aussi des fonctions de commandes des surfaces de contrôle, volets et ailerons, de manière connue en soi.

L'axe vertical, perpendiculaire à l'axe principal du fuselage 11 et à l'axe passant par les extrémités d'ailes avant, qui passe par le centre de gravité de l'aéronef 10 traverse le triangle exinscrit passant par les hélices 22, 25 et 27. Ainsi, le vol stationnaire est stable.

Comme on l'observe en figures 5 et 6, dans le mode de réalisation représenté, l'hélice 22 en extrémité arrière du fuselage 11 est positionnée en dessous de l'axe principal du fuselage 11 lorsque l'arbre de cette hélice 22 est dans une orientation verticale. Les ailes arrière 15 et 16 peuvent ainsi s'étendre jusqu'au moteur arrière 21 sans limiter le débattement de l'hélice arrière 22.

Le logement formant carénage 37 de protection de l'hélice 22 en extrémité arrière du fuselage est intégré dans le fuselage 11. A cet effet, le fuselage 11 présente, en dessous de son extrémité arrière, une concavité 37 traversée par les pales de l'hélice 22 lors du vol en configuration verticale.

Les hélices 25 et 27 des moteurs 24 et 26 portés par les ailes 13 et 14 sont positionnées au-dessus des ailes lorsque les arbres de ces hélices sont en position verticale. Comme illustré dans les figures, les hélices 25 et 27 des moteurs 24 et 26 portés par les ailes 13 et 14 sont positionnées en amont des ailes avant, dans le sens du vol de l'aéronef 10.

Sur le plan aérodynamique, le fait d'avoir les ailes avant soufflées accentue l'effet rhomboïde et augmente sérieusement l'efficacité des gouvernes ainsi que la variation de cambrure des ailes soufflées. Ceci se traduit par une augmentation des performances de l'avion aux basses vitesses et une diminution de la trainée. Cette diminution est sensible pour des envergures d'aéronef au-delà de cinq mètres.

Du fait du souffle des hélices 25 et 27, les écoulements autour des ailes, surtout des ailes avant 13 et 14, sont beaucoup plus sains et mieux contrôlés. Ils permettent donc une plus grande efficacité des volets, surtout en position basse pour augmenter la portance.

Le fait d'avoir deux moteurs 24 et 26 sur les ailes avant 13 et 14 permet d'obtenir un contrôle en lacet inexistant sur une aile rhomboïde pure. Ce qui peut revêtir une grande importance pour certaines phases de vol, dans des scénarios de missions spécifiques.

L'inventeur a découvert que la configuration rhomboïde permet de garder une finesse quasi constante sur une grande plage de vitesse en faisant varier la cambrure des ailes avant (et arrière pour conserver un vol équilibré). Cette particularité a été confirmée lors d'études en soufflerie. L'utilisation du morphisme des ailes est particulièrement bien adaptée car une faible variation angulaire des ailes avant et arrière peut introduire des variations importantes d'incidence et/ou de variation de cambrure sur leur envergure. Cela permet de limiter l'usage des déflexions des volets, qui ont comme inconvénient la complexité des mixages des huit volets et le manque de précision/résolution des servomoteurs et des commandes mécaniques de ces servomoteurs.

Le morphisme est une solution extrêmement élégante pour "affiner" le réglage de la voilure aux conditions de vol sans avoir l'inconvénient des solutions lourdes et aérodynamiquement peu propres des volets multiples au bord de fuite et/ou les becs et autres appendices au bord d'attaque. La voilure de type rhomboïde se prête particulièrement bien à ce type de "contrôle".

Préférentiellement, les moteurs 24 et 26 sont montés sur la fibre neutre de torsion des ailes avant 13 et 14. Dans des variantes, la variation d'orientation angulaire des servo-moteurs et donc des axes de rotation des hélices sert à compenser la variation d'orientation angulaire induite par les torsions des ailes provoquées par le morphisme.

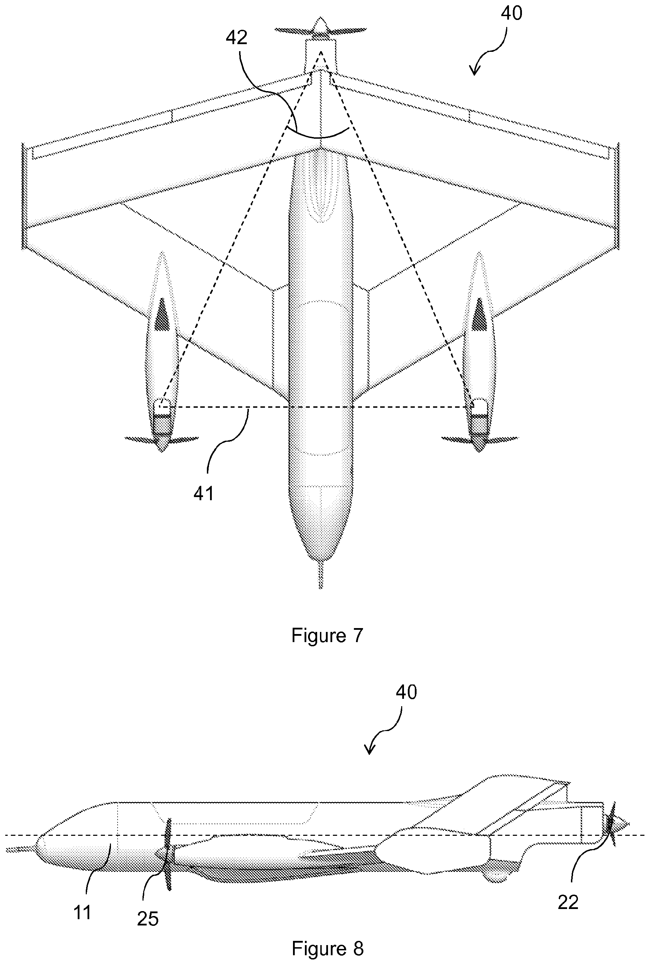

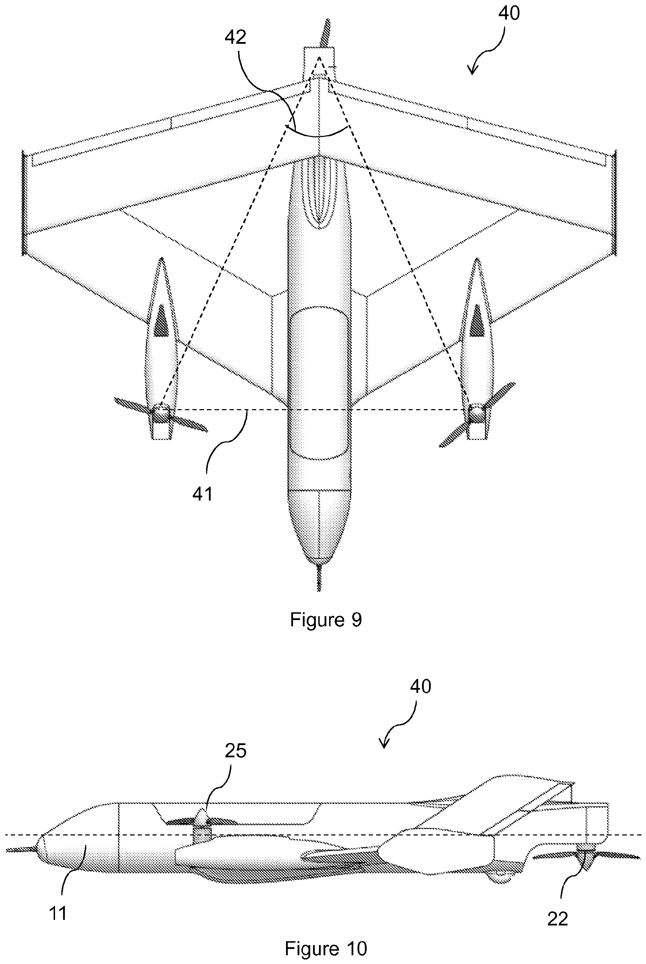

Comme on l'observe en figures 7 et 9, dans l'aéronef 40, qui présente les mêmes caractéristiques techniques que l'aéronef 10, les moteurs 21, 24 et 26 sont disposés sur un triangle isocèle 41 dont la mesure de l'angle le plus aigu est supérieure à 45 degrés et, préférentiellement, supérieur à 50 degrés.

Ce triangle augmente la stabilité de l'aéronef en vol vertical. Ce triangle répond aussi à la loi d'équilibre lorsque les trois hélices sont basculées en configuration de vol vertical. Pour des raisons d'équilibrage, lorsque les moteurs sont basculés en position de vol horizontal, et pour respecter le centre de gravité de l'aéronef, il peut être intéressant de garder les deux moteurs/hélices avant identiques (mais contre-rotatifs) et de mettre le groupe moteur/hélice arrière à une distance supérieure (triangle isocèle) avec donc une puissance/traction moindre. C'est aussi intéressant dans le cas de l'optimisation de la propulsion puisqu'une configuration pousseur est plus efficace aérodynamiquement parlant, donc nécessitant moins de puissance/énergie.

L'équilibre des forces en vol vertical est important : il faut que le moment créé par les deux hélices avant soit équivalent au moment créé par l'hélice arrière en rapport avec le centre de gravité de l'aéronef. Pour obtenir cet équilibre, il faut soit jouer sur les puissances (vitesses de rotation et pas de l'hélice) soit sur les distances des points d'application des forces par rapport au centre de gravité.

Pour des raisons de stabilité en vol horizontal, il faut que, lors du basculement des groupes moteurs/hélice, la marge statique nécessaire à la stabilité longitudinale de l'aéronef soit respectée. Ceci est inhérent à la répartition des masses donc au dessin général de l'aéronef avec ses composants et leurs masses respectives dans cette configuration.

Les deux moteurs avant 24 et 26 basculent vers le haut pour passer en configuration de vol vertical alors que le moteur arrière 21 bascule vers le bas. Ces sens de basculement/rotation sont plus efficaces en permettant de mieux dégager les hélices 22, 25 et 27 des masques éventuels de la structure de l'aéronef.

On observe, en figures 8 et 10 que les centres des hélices avant 25 et 27 sont, en configuration de vol horizontal positionnés plus bas, par rapport au fuselage 11 de l'aéronef 40, que le centre de l'hélice arrière 22, ce qui favorise l'inclinaison de l'aéronef assurant la portance. Au contraire, en configuration de vol vertical, les centres des hélices avant 25 et 27 sont positionnés plus haut que le centre de l'hélice arrière 22. L'hélice arrière 22 bénéficie ainsi d'une configuration pousseur plus efficace aérodynamiquement parlant, donc permettant plus de modulation de puissance pour assurer l'équilibre pendant la phase d'atterrissage, qui peut être délicate à cause des effets de vent et de sol. En configuration de vol vertical, les centres des hélices avant sont positionnés au-dessus de l'axe principal du fuselage 11. La stabilité du vol vertical est ainsi renforcée puisque le centre de poussée est au-dessus du centre de gravité. En configuration de vol horizontal, les centres des hélices avant 25 et 27 sont positionnés en dessous de l'axe principal du fuselage 11.

On note que l'aéronef 10 peut être lancé par une catapulte, des moyens pyrotechniques et/ou un ressort et récupéré dans un filet.

## Revendications

1. Aéronef (10, 40) comportant un fuselage (11) et une voilure rhomboédrique (12) comportant des ailes avant (13, 14) montées sur un support d'emplanture avant (17) et des ailes arrière (15, 16) montées sur un support d'emplanture arrière (18), **caractérisé en ce que** :
- au moins deux ailes (13, 14) portent un moteur (24, 26) muni d'une hélice (25, 27),
- l'extrémité arrière du fuselage porte un moteur (21) muni d'une hélice (22) et
- l'aéronef comporte des moyens (28 à 35) de basculement de ces moteurs, l'arbre de rotation de chacune des hélices basculant entre une orientation parallèle à l'axe principal du fuselage et une orientation perpendiculaire à l'axe principal du fuselage et à un axe passant par les extrémités des ailes avant ;
dans lequel, lorsque l'arbre de rotation des hélices est selon l'orientation perpendiculaire à l'axe principal du fuselage, les centres des hélices avant (25, 27) sont positionnés au-dessus de l'axe principal du fuselage (11) et, lorsque l'arbre de rotation des hélices est selon l'orientation parallèle à l'axe principal du fuselage, les centres des hélices avant sont positionnés en dessous de l'axe principal du fuselage.

2. Aéronef (10, 40) selon la revendication 1, dans lequel l'axe perpendiculaire à l'axe principal du fuselage (11) et à l'axe passant par les extrémités d'ailes avant qui passe par le centre de gravité de l'aéronef traverse le triangle exinscrit passant par les hélices.

3. Aéronef (10, 40) selon l'une des revendications 1 ou 2, dans lequel l'hélice (22) en extrémité arrière du fuselage (11) est positionnée en dessous de l'axe principal du fuselage lorsque l'arbre de cette hélice est dans l' orientation perpendiculaire à l'axe principal du fuselage.

4. Aéronef (10, 40) selon la revendication 3, dans lequel une concavité (37) du fuselage (11) en extrémité arrière du fuselage constitue un logement formant carénage de protection de l'hélice arrière (22), les pales de l'hélice arrière traversant cette concavité lorsque l'arbre de rotation de l'hélice est dans l'orientation perpendiculaire à l'axe principale du fuselage.

5. Aéronef (10, 40) selon l'une des revendications 3 ou 4, dans lequel les centres des hélices avant (25, 27) sont, lorsque l'arbre de rotation des hélices est selon l'orientation parallèle à l'axe principal du fuselage, positionnés plus bas, par rapport au fuselage de l'aéronef, que le centre de l'hélice arrière (22), et, lorsque l'arbre de rotation des hélices est selon l'orientation perpendiculaire à l'axe principal du fuselage, les centres des hélices avant sont positionnés plus haut que le centre de l'hélice arrière.

6. Aéronef (10, 40) selon l'une des revendications 1 à 5, dans lequel le support d'emplanture avant (17) forme un patin d'atterrissage.

7. Aéronef (10, 40) selon l'une des revendications 1 à 6, dans lequel les moteurs (24, 26) des ailes sont montés sur la fibre neutre de torsion des ailes avant (13, 14).

8. Aéronef (10, 40) selon l'une des revendications 1 à 7, dans lequel les moteurs (21, 24 et 26) sont aux sommets d'un triangle isocèle (41) dont la mesure du plus petit angle (42) est supérieure à 45 degrés.

9. Aéronef (10, 40) selon la revendication 8, dans lequel la mesure du plus petit angle (42) du triangle (41) formé par les moteurs (21, 24 et 26) est supérieure à 50 degrés.

10. Aéronef (10, 40) selon l'une des revendications 1 à 9, dans lequel les hélices (25, 27) des moteurs (24, 26) portés par les ailes (13, 14) sont positionnées au-dessus des ailes lorsque les arbres de ces hélices sont dans l' orientation perpendiculaire à l'axe principal du fuselage (11).

11. Aéronef (10, 40) selon l'une des revendications 1 à 10, dans lequel les hélices (25, 27) des moteurs (24, 26) portés par les ailes (13, 14) sont positionnées en amont des ailes avant, dans le sens du vol de l'aéronef.

12. Aéronef (10, 40) selon l'une des revendications 1 à 11, dans lequel les supports d'emplanture d'ailes (17, 18) sont positionnés respectivement, en dessous et au-dessus du fuselage.

13. Aéronef (10, 40) selon l'une des revendications 1 à 12, dans lequel, à chaque jonction des extrémités d'ailes avant et arrière est positionnée une surface verticale (19, 20) de fermeture des extrémités d'ailes.

14. Aéronef (10, 40) selon la revendication 13, dans lequel des prolongations verticales vers le bas (38) des surfaces verticales (19, 20) de fermeture des extrémités d'ailes (13 à 16) forment des patins d'atterrissage.

15. Aéronef (10, 40) selon l'une des revendications 1 à 14, dans lequel le fuselage (11) ne porte aucun empennage vertical.

## Patentansprüche

1. Luftfahrzeug (10, 40), umfassend einen Rumpf (11) und eine rhomboedrische Tragfläche (12), umfassend vordere Flügel (13, 14), die auf einer vorderen Flügelwurzel (17) angebracht sind, und hintere Flügel (15,1 6), die auf einer hinteren Flügelwurzel (18) angebracht sind, **dadurch gekennzeichnet, dass**:
- wenigstens zwei Flügel (13, 14) einen (24, 26) Motor tragen, der mit einem Propeller (25, 27) versehen ist,
- das hintere Ende des Rumpfes einen Motor (21) trägt, der mit einem Propeller (22) versehen ist und
- das Luftfahrzeug Kippmittel (28 à 35) dieser Motoren umfasst, wobei die Drehwelle jedes Propellers zwischen einer parallelen Ausrichtung zur Hauptachse des Rumpfes und einer Ausrichtung kippt, die zur Hauptachse des Rumpfes und zu einer Achse lotrecht ist, die durch die Enden der vorderen Flügel hindurchtritt;
bei dem die Zentren der vorderen Propeller (25, 27) oberhalb der Hauptachse des Rumpfes (11) angeordnet sind, wenn die Drehachse der Propeller gemäß der Ausrichtung ist, die lotrecht zur Hauptachse des Rumpfes ist, und die Zentren der vorderen Propeller unterhalb der Hauptachse des Rumpfes angeordnet sind, wenn die Drehachse der Propeller gemäß der Ausrichtung ist, die parallel zur Hauptachse des Rumpfes ist.

2. Luftfahrzeug (10, 40) gemäß Anspruch 1, bei dem die Achse, die lotrecht zur Hauptachse des Rumpfes (11) und zu der Achse ist, die durch die vorderen Flügelenden hindurchtritt, die durch den Schwerpunkt des Luftfahrzeugs hindurchtritt, das anliegende Dreieck durchquert, das durch die Propeller hindurchtritt.

3. Luftfahrzeug (10, 40) gemäß einem der Ansprüche 1 oder 2, bei dem der Propeller (22) am hinteren Ende des Rumpfes (11) unterhalb der Hauptachse des Rumpfes angeordnet ist, wenn die Welle dieses Propellers in der Ausrichtung ist, die zur Hauptachse des Rumpfes lotrecht ist.

4. Luftfahrzeug (10, 40) gemäß Anspruch 3, bei dem eine Vertiefung (37) des Rumpfes (11) am hinteren Ende des Rumpfes eine Aufnahme bildet, die eine Schutzverkleidung des hinteren Propellers (22) bildet, wobei die Blätter des hinteren Propellers diese Vertiefung durchqueren, wenn die Drehwelle des Propellers in der Ausrichtung ist, die zur Hauptachse des Rumpfes lotrecht ist.

5. Luftfahrzeug (10, 40) gemäß einem der Ansprüche 3 oder 4, bei dem die Zentren der vorderen Propellers (25, 27) in Bezug auf den Rumpf des Luftfahrzeugs weiter unten angeordnet sind als das Zentrum des hinteren Propellers (22), wenn die Drehwelle der Propeller gemäß der Ausrichtung ist, die zur Hauptachse des Rumpfes parallel ist, und die Zentren der vorderen Propeller weiter oben angeordnet sind als das Zentrum des hinteren Propellers, wenn die Drehwelle der Propeller gemäß der Ausrichtung ist, die zur Hauptachse des Rumpfes lotrecht ist.

6. Luftfahrzeug (10, 40) gemäß einem der Ansprüche 1 bis 5, bei dem der vordere Flügelwurzel (17) eine Landekufe bildet.

7. Luftfahrzeug (10, 40) gemäß einem der Ansprüche 1 bis 6, bei dem die Motoren (24, 26) der Flügel auf der neutralen Torsionsfaser der vorderen Flügel (13, 14) angebracht sind.

8. Luftfahrzeug (10, 40) gemäß einem der Ansprüche 1 bis 7, bei dem die Motoren (21, 24 und 26) an den Spitzen eines gleichschenkligen Dreiecks (41) sind, dessen Messung des kleinsten Winkels (42) größer ist als 45 Grad.

9. Luftfahrzeug (10, 40) gemäß Anspruch 9, bei dem die Messung des kleinsten Winkels (42) des Dreiecks (41), das von den Motoren (21, 24 und 26) gebildet ist, größer ist als 50 Grad.

10. Luftfahrzeug (10, 40) gemäß einem der Ansprüche 1 bis 9, bei dem die Propeller (25, 27) der Motoren (24, 26), die von den Flügeln (13, 14) getragen sind, oberhalb der Flügel angeordnet sind, wenn die Wellen dieser Propeller in der Ausrichtung sind, die zur Hauptachse des Rumpfes (11) lotrecht ist.

11. Luftfahrzeug (10, 40) gemäß einem der Ansprüche 1 bis 10, bei dem die Propeller (25, 27) der Motoren (24, 26), die von den Flügeln (13, 14) getragen sind, den vorderen Flügel in der Flugrichtung des Luftfahrzeugs vorgeschaltet angeordnet sind.

12. Luftfahrzeug (10, 40) gemäß einem der Ansprüche 1 bis 11, bei dem die Flügelwurzeln (17, 18) jeweils unterhalb und oberhalb des Rumpfes angeordnet sind.

13. Luftfahrzeug (10, 40) gemäß einem der Ansprüche 1 bis 12, bei dem an jeder Verbindung der vorderen und hinteren Flügelenden eine vertikale Verschlussfläche (19, 20) der Flügelenden angeordnet ist.

14. Luftfahrzeug (10, 40) gemäß Anspruch 13, bei dem die vertikalen Verlängerungen nach unten (38) der vertikalen Verschlussflächen (19, 20) der Flügelenden (13 bis 16) Landekufen bilden.

15. Luftfahrzeug (10, 40) gemäß einem der Ansprüche 1 bis 14, bei dem der Rumpf (11) kein vertikales Leitwerk trägt.

## Claims

1. Aircraft (10, 40) comprising a fuselage (11) and a rhombohedral wing structure (12) comprising front wings (13, 14) mounted on a front wing-root support (17) and rear wings (15, 16) mounted on a rear wing-root support (18), **characterized in that**:
- at least two wings (13, 14) support an engine (24, 26) provided with a propeller (25, 27);
- the rear end of the fuselage supports an engine (21) provided with a propeller (22); and
- the aircraft comprises means (28 to 35) for tilting said engines, the rotary shaft of each of the propellers being switched between an orientation parallel to the main axis of the fuselage and an orientation perpendicular to the main axis of the fuselage and to an axis extending through the ends of the front wings;
wherein, when the rotary shaft of the propellers is according to the orientation perpendicular to the main axis of the fuselage, the centers of the front propellers (25, 27) are positioned above the main axis of the fuselage (11) and, when the rotary shaft of the propellers is according to the orientation parallel to the main axis of the fuselage, the centers of the front propellers are positioned below the main axis of the fuselage.

2. Aircraft (10, 40) according to claim 1, wherein the axis that is perpendicular to the main axis of the fuselage (11) and to the axis extending through the ends of the front wings, and which extends through the center of gravity of the aircraft, passes through the escribed triangle extending through the propellers.

3. Aircraft (10, 40) according to one of claims 1 or 2, wherein the propeller (22) at the rear end of the fuselage (11) is positioned below the main axis of the fuselage when this propeller's shaft is in the orientation perpendicular to the main axis of the fuselage.

4. Aircraft (10, 40) according to claim 3, wherein a concavity (37) of the fuselage (11) at the rear end of the fuselage constitutes a housing forming a protective cowling for the rear propeller (22), the blades of the rear propeller traversing this concavity when the rotary shaft of the propeller is according to the orientation perpendicular to the main axis of the fuselage.

5. Aircraft (10, 40) according to one of claims 3 or 4, wherein the centers of the front propellers (25, 27) are, when the rotary shaft of the front propellers is according to the orientation parallel to the main axis of the fuselage, positioned lower, relative to the fuselage of the aircraft, than the center of the rear propeller (22) and, when the rotary shaft of the propellers is according to the orientation perpendicular to the main axis of the fuselage, the centers of the front propellers are positioned higher than the center of the rear propeller.

6. Aircraft (10, 40) according to one of claims 1 to 5, wherein the front wing-root support (17) forms a landing skid.

7. Aircraft (10, 40) according to one of claims 1 to 6, wherein the engines (24, 26) of the wings are mounted on the neutral torsional axis of the front wings (13, 14).

8. Aircraft (10, 40) according to one of claims 1 to 7, wherein the engines (21, 24 and 26) are at the apexes of an isosceles triangle (41) whose smallest angle (42) is less than 45 degrees.

9. Aircraft (10, 40) according to claim 8, wherein the smallest angle (42) of the triangle (41) formed by the engines (21, 24 and 26) is more than 50 degrees.

10. Aircraft (10, 40) according to one of claims 1 to 9, wherein the propellers (25, 27) of the engines (24, 26) borne by the wings (13, 14) are positioned above the wings when the shafts of these propellers are in the orientation perpendicular to the main axis of the fuselage (11).

11. Aircraft (10, 40) according to one of claims 1 to 10, wherein the propellers (25, 27) of the engines (24, 26) borne by the wings (13, 14) are positioned upstream from the front wings, in the direction of flight of the aircraft.

12. Aircraft (10, 40) according to one of claims 1 to 11, wherein the wing-root supports (17, 18) are positioned respectively below and above the fuselage.

13. Aircraft (10, 40) according to one of claims 1 to 12, wherein a vertical surface (19, 20) for closing wing ends is positioned at each junction of the front and rear wing ends.

14. Aircraft (10, 40) according to claim 13, wherein landing skids are formed from vertical extensions to the base (38) of the vertical surfaces (19, 20) for closing wing ends (13 to 16).

15. Aircraft (10, 40) according to one of claims 1 to 14, wherein the fuselage (11) has no vertical tail.
